# DEMANDE DE BREVET EUROPEEN

(11) **EP 4 851 030 A1**
(43) Date de publication de la demande: **09.12.2026**
(21) Numéro de dépôt: 26171749.0
(22) Date de dépôt: 10.04.2026
(51) Int. Cl.: B62K 5/02

(54) **ÉQUIPEMENT À FIXATION SIMPLIFIÉE SUR UNE PAROI DE SUPPORT D'UN VÉHICULE À AU MOINS TROIS ROUES**

(30) Priorité: 05.06.2025 FR 2506123
(71) Demandeur: Stellantis Auto SAS, 78300 Poissy (FR)
(72) Inventeur: JIRRI, HAMZA, 20270 CASABLANCA (MA); HEDDI, SANAE, 30090 FES (MA); EL AKRAA, MOHAMED CHAFIK, 20270 CASABLANCA (MA); EL HACHIMI, IMANE, 20270 CASABLANCA (MA)
(74) Mandataire: BCIP

(57) **Abrégé**

Un équipement (EV) comprend un boîtier (BE) comportant au moins deux éléments de fixation (EF) comprenant chacun une première partie (P1) propre à être placée soit dans une première position lui permettant de traverser au moins partiellement un trou traversant correspondant d'une paroi de support d'un véhicule comprenant au moins trois roues, soit dans une seconde position dans laquelle elle participe à une immobilisation de l'équipement (EV) sur cette paroi de support.

## Description

### Domaine technique de l'invention

L'invention concerne les véhicules comprenant au moins trois roues et une paroi de support sur laquelle peut être installé au moins un équipement, et plus précisément l'installation d'un tel équipement sur une telle paroi de support.

### Etat de la technique

Certains véhicules terrestres à au moins trois roues, généralement de type utilitaire (comme par exemple des triporteurs (ou tricycles) motorisés), comprennent une paroi de support sur laquelle peut être installé au moins un équipement. Par exemple, lorsque le véhicule est un triporteur et que la paroi de support est un écran pare-vent (faisant éventuellement partie d'une cabine solidarisée à un plancher et délimitant un habitacle), l'équipement peut être un bloc optique.

Habituellement, les équipements, comme par exemple les blocs optiques, comprennent des boîtiers qui sont solidarisés fixement à la paroi de support au moyen de vis. Mais, lorsque l'accès à la zone de la face interne (ou arrière) de la paroi de support est restreint ou difficile, comme c'est le cas dans certains triporteurs, le positionnement de chaque vis et chaque vissage, en même temps que le boîtier est tenu, s'avèrent (très) difficiles, voire impossible, en particulier avec une visseuse électrique. De ce fait, l'installation d'un équipement sur une paroi de support est (très) contraignante, et donc peu ou pas ergonomique, pour le technicien qui l'effectue.

Il serait certes possible que le technicien utilise un petit tournevis, mais le contrôle du couple ne serait alors plus possible. En outre, le problème du positionnement de chaque vis en même temps que le boîtier est tenu serait toujours présent.

L'invention a donc notamment pour but d'améliorer la situation.

### Présentation de l'invention

Elle propose notamment à cet effet un équipement comprenant un boîtier propre à être solidarisé à une paroi de support d'un véhicule comprenant au moins trois roues.

Cet équipement se caractérise par le fait que son boîtier comprend au moins deux éléments de fixation comprenant chacun une première partie propre à être placée soit dans une première position lui permettant de traverser au moins partiellement un trou traversant correspondant de la paroi de support (du véhicule), soit dans une seconde position dans laquelle elle participe à une immobilisation de l'équipement sur la paroi de support.

Grâce à l'invention, un technicien peut désormais installer un équipement sur une paroi de support sans vis (et donc sans opération de vissage) et sans outil, ce qui est particulièrement avantageux dans les environnements contraints.

L'équipement selon l'invention peut comporter d'autres caractéristiques qui peuvent être prises séparément ou en combinaison, et notamment :
- son boîtier peut comprendre trois éléments de fixation distants ;
- chaque élément de fixation peut comprendre une seconde partie solidarisée fixement au boîtier et sur laquelle est montée à rotation la première partie afin d'être placée dans sa première ou seconde position ;
- en présence de la dernière option, chaque première partie peut comprendre deux parois distantes espacées d'une protubérance d'immobilisation d'une distance qui est supérieure à une épaisseur de la paroi de support, afin qu'après la traversée du trou traversant correspondant par cette protubérance d'immobilisation placée dans la première position, la paroi de support se retrouve placée entre les parois distantes et la protubérance d'immobilisation, de manière à permettre un entraînement en rotation de la première partie propre à la placer dans la seconde position dans laquelle la protubérance d'immobilisation est en partie placée devant une face de la paroi de support afin d'immobiliser le boîtier sur cette dernière ;
- en présence de la dernière sous-option, la protubérance d'immobilisation peut comprendre deux sous-parties d'immobilisation opposées de part et d'autre d'une sous-partie centrale, de formes générales parallélépipédiques, et propres à traverser respectivement deux zones du trou traversant correspondant, opposées et ayant des formes générales rectangulaires ;
- il peut constituer un bloc optique.

L'invention propose également un véhicule comprenant, d'une part, au moins trois roues et une paroi de support, et, d'autre part, un équipement du type de celui présenté ci-avant et solidarisé fixement, mais de façon réversible, à la paroi de support par traversée au moins partielle des trous traversants par les premières parties des éléments de fixation correspondants dans la première position puis placement des éléments de fixation dans la seconde position.

Le véhicule selon l'invention peut comporter d'autres caractéristiques qui peuvent être prises séparément ou en combinaison, et notamment :
- sa paroi de support peut être un écran pare-vent ;
- sa paroi de support peut comprendre, à proximité de chaque trou traversant, au moins une protubérance de blocage propre à bloquer un élément de fixation correspondant placé dans la seconde position ;
- il peut constituer un triporteur motorisé.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, une partie d'un exemple de véhicule comportant un exemple de paroi de support équipée de deux équipements selon l'invention,
[Fig. 2] illustre schématiquement, dans une vue en perspective du côté de la face avant (ou externe), la paroi de support du véhicule de la figure 1 sur laquelle ont été installés les boîtiers des deux exemples de réalisation d'équipement selon l'invention,
[Fig. 3] illustre schématiquement, dans une vue en perspective du côté avant, une partie de l'un des équipements selon l'invention de la figure 2 avant sa solidarisation à la paroi de support,
[Fig. 4] illustre schématiquement, dans une vue en coupe dans un plan vertical et transversal, une partie de la paroi de support de la figure 2 avec un élément de fixation d'un équipement placé dans sa première position pour traverser partiellement un trou traversant correspondant pendant la phase d'installation, et
[Fig. 5] illustre schématiquement, dans une vue en coupe dans un plan vertical et transversal, une partie de la paroi de support de la figure 2 avec un élément de fixation d'un équipement placé dans sa seconde position pour participer à l'immobilisation de cet équipement sur cette paroi de support.

### Description détaillée de l'invention

L'invention a notamment pour but de proposer un équipement EV destiné à être solidarisé facilement et sans outil à une paroi de support PS d'un véhicule V à au moins trois roues RV.

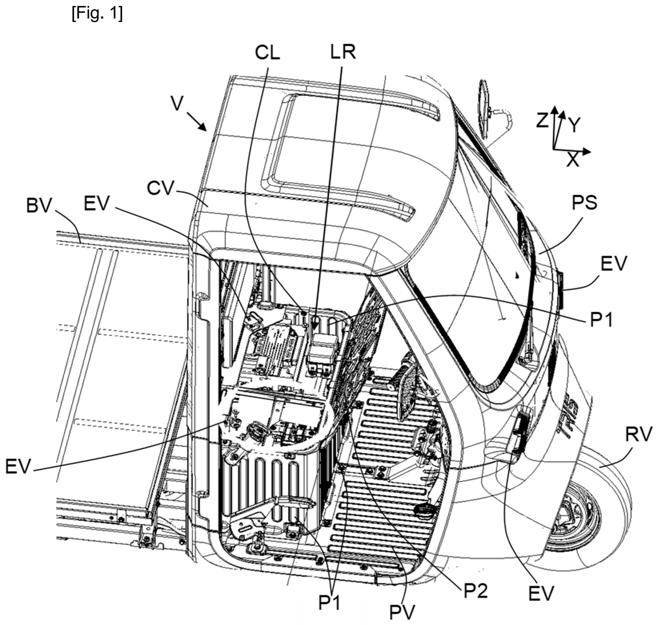

Dans ce qui suit, on considère, à titre d'exemple non limitatif, que le véhicule V à au moins trois roues RV est de type utilitaire, et plus précisément qu'il s'agit d'un triporteur (ou tricycle) motorisé comme illustré non limitativement sur la figure 1. Mais l'invention n'est pas limitée à ce type de véhicule. Elle concerne en effet tout véhicule terrestre comprenant au moins trois roues et une paroi de support propre à recevoir au moins un équipement.

Sur les figures 1 à 5 la direction X est la direction longitudinale du véhicule V, laquelle est sensiblement parallèle aux côtés latéraux (ou longitudinaux), la direction Y est la direction transversale du véhicule V, laquelle est perpendiculaire à la direction longitudinale X, et la direction Z est la direction verticale du véhicule V, laquelle est perpendiculaire aux directions longitudinale X et transversale Y.

On a schématiquement illustré sur la figure 1 une partie d'un exemple de véhicule V (ici un triporteur motorisé) comportant un exemple de paroi de support PS équipée de deux équipements EV selon l'invention. Bien que cela n'apparaisse que partiellement, le véhicule V comprend au moins trois roues RV et un plancher PV sur lequel sont installées (ici sensiblement verticalement) des premières parois P1 qui délimitent un logement LR dans lequel sont installés d'autres équipements. On notera que dans l'exemple illustré non limitativement sur la figure 1 le véhicule V comprend aussi une cabine CV solidarisée à son plancher PV et délimitant un habitacle, et une benne arrière BV placée derrière le plancher PV et la cabine CV et destinée à recevoir des objets à transporter.

Par ailleurs, le logement LR peut avoir, par exemple et comme illustré non limitativement, une face supérieure masquée par une seconde paroi P2 participant à la définition d'une assise permettant au conducteur de s'asseoir pour conduire le véhicule V. Cette seconde paroi (d'assise) P2 permet donc de contrôler l'accès au logement LR.

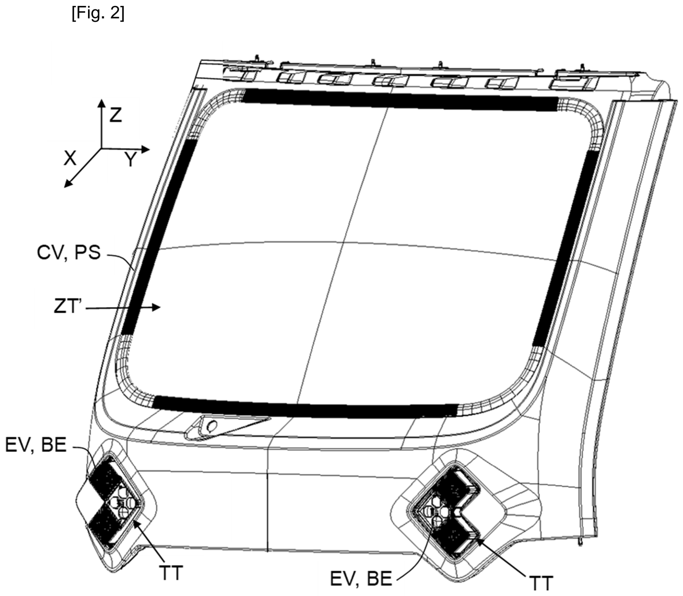

Par exemple, et comme illustré non limitativement sur les figures 1 et 2, cette éventuelle seconde paroi (d'assise) P2 peut être montée à rotation sur un cadre CL qui est installé dans une partie supérieure du logement LR et auquel sont solidarisées fixement les premières parois P1. On notera que dans l'exemple illustré non limitativement sur la figure 1 la seconde paroi (d'assise) P2 est montée à rotation sur la partie transversale avant du cadre CL (parallèle à la direction transversale Y). De ce fait, la seconde paroi (d'assise) P2 peut être placée dans une position redressée, illustrée sur la figure 1 et permettant l'accès au logement LR et donc aux équipements installés dedans, ou dans une position rabattue contre le cadre CL, non illustrée, masquant le logement LR mais permettant au conducteur de s'asseoir pour conduire le véhicule V.

Par exemple, et comme illustré non limitativement sur la figure 1, lorsque la seconde paroi (d'assise) P2 est montée à rotation sur le cadre CL, il est avantageux que le véhicule V comprenne au moins un élément de verrouillage EV qui est propre, lorsque la seconde paroi P2 est placée dans sa position rabattue contre ce cadre CL, à verrouiller cette seconde paroi P2 dans cette position rabattue. Cela permet de sécuriser l'accès à l'intérieur du logement LR. On notera que dans l'exemple illustré non limitativement sur la figure 1 le véhicule V comprend deux éléments de verrouillage EV, mais il pourrait n'en comporter qu'un seul. De préférence, l'un au moins de ces éléments de verrouillage EV comprend une serrure actionnable par une clé éventuellement dédiée.

On notera également que dans l'exemple illustré non limitativement sur la figure 1 la paroi de support PS est un écran pare-vent faisant partie de la cabine CV, et comportant une zone transparente ZT' permettant au conducteur de voir ce qui est placé devant le véhicule V. Mais l'invention n'est pas limitée à ce type de paroi de support PS. Elle concerne en effet toute paroi de support devant équiper un véhicule à au moins trois roues et sur laquelle peut être solidarisé au moins un équipement.

On notera également que dans l'exemple illustré non limitativement sur les figures 1 et 2 les équipements EV sont des blocs optiques. Mais l'invention n'est pas limitée à ce type d'équipement EV. Elle concerne en effet tout équipement comprenant un boîtier pouvant être solidarisé fixement à une paroi de support d'un véhicule à au moins trois roues.

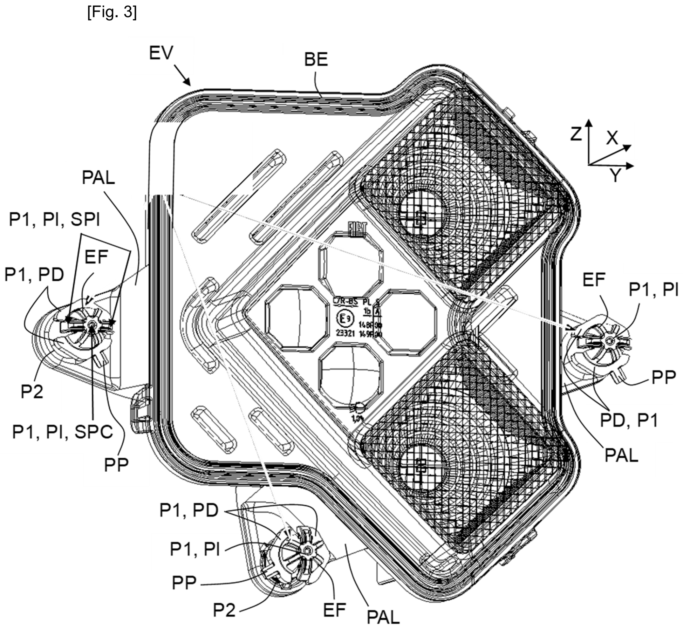

Comme illustré au moins partiellement sur les figures 2 et 3, un équipement EV, selon l'invention, comprend notamment un boîtier BE comportant au moins deux éléments de fixation EF, par exemple définis sur des pattes latérales PAL. On comprendra que ces pattes latérales PAL sont situées du côté de la face interne (ou arrière) de la paroi de support PS, et donc sont invisibles (tout comme leurs éléments de fixation EF )lorsque l'on regarde la face externe (ou avant) de la paroi de support PS, visible sur les figures 1 et 2.

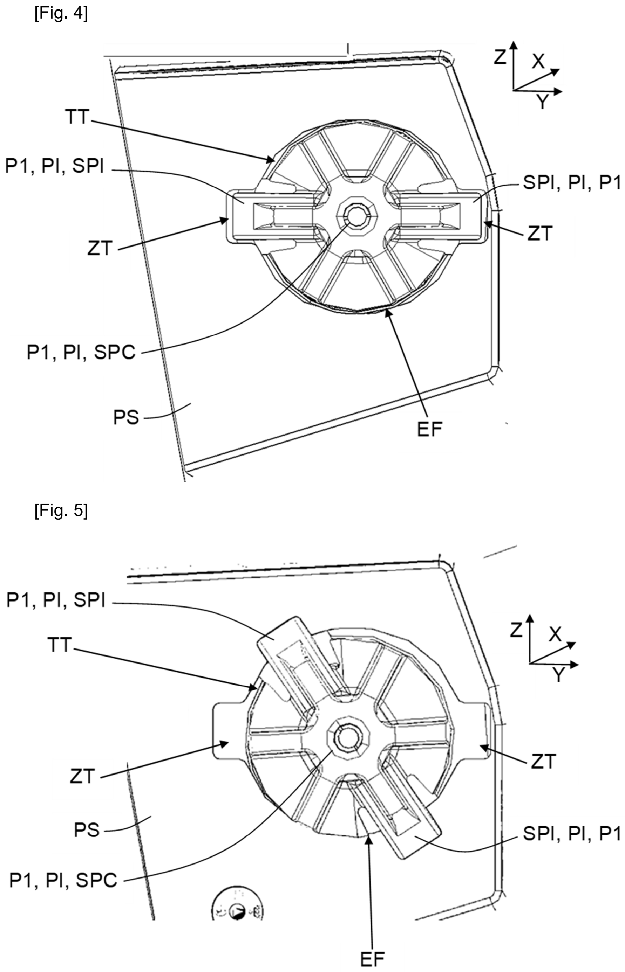

Comme illustré sur la figure 3, chaque élément de fixation EF comprend une première partie P1 qui est propre à être placée soit dans une première position (illustrée sur la figure 4), soit dans une seconde position (illustrée sur la figure 5).

Dans sa première position, l'élément de fixation EF est agencé pour traverser au moins partiellement un trou traversant TT correspondant défini dans la paroi de support PS.

Dans sa seconde position, l'élément de fixation EF est agencé pour participer à l'immobilisation de son équipement EV sur la paroi de support PS.

Ainsi, un technicien peut désormais installer un équipement EV sur une paroi de support PS d'un véhicule V sans vis (et donc sans opération de vissage) et sans outil, ce qui est particulièrement avantageux dans les environnements contraints, et de surcroît simple et économique. Il suffit en effet de positionner la première partie P1 de chaque élément de fixation EF dans sa première position pour qu'elle traverse partiellement le trou traversant TT correspondant puis dans sa seconde position pour qu'elle immobilise son boîtier BE sur la paroi de support PS.

Par exemple, et comme illustré non limitativement sur la figure 3 le boîtier BE peut comprendre trois éléments de fixation EF distants. Mais le nombre d'éléments de fixation EF peut prendre n'importe quelle valeur supérieure ou égale à deux.

Egalement par exemple, et comme illustré non limitativement et au moins partiellement sur les figures 3 à 5, chaque élément de fixation EF peut comprendre une seconde partie P2 solidarisée fixement au boîtier BE et sur laquelle est montée à rotation la première partie P1 afin de pouvoir être placée dans sa première ou seconde position. On comprendra qu'une fois la première partie P1 placée dans sa première position et introduite partiellement dans le trou traversant TT correspondant (figure 4), l'entraînement en rotation de cette première partie P1 provoque son placement dans sa seconde position (figure 5 - pour l'installation de l'équipement EV), et inversement (pour la désinstallation de l'équipement EV).

Afin de faciliter l'entraînement en rotation de chaque première partie P1, elle peut, comme illustré non limitativement et au moins partiellement sur la figure 3, comprendre une patte radiale PP saillante sur laquelle un technicien peut exercer une pression dans le sens horaire ou antihoraire selon le besoin.

On notera que l'angle de rotation nécessaire au changement de position d'une première partie P1 d'un élément de fixation EF peut prendre n'importe quelle valeur comprise entre 10° et 170°. Ainsi, dans l'exemple illustré non limitativement sur la figure 5, l'angle de rotation est égal à 45°. Mis il pourrait être égal à 90°, par exemple.

Egalement par exemple, et comme illustré non limitativement et au moins partiellement sur les figures 3 à 5, la première partie P1 de chaque élément de fixation EF peut comprendre deux parois distantes PD et une protubérance d'immobilisation PI solidarisée à ces parois distantes PD afin de tourner ensemble (simultanément). Ces deux parois distantes PD sont espacées de cette protubérance d'immobilisation PI d'une distance qui est (légèrement) supérieure à l'épaisseur de la paroi de support PS. Ainsi, une fois qu'une protubérance d'immobilisation PI placée dans la première position a traversé le trou traversant TT correspondant, la paroi de support PS se retrouve placée entre les parois distantes PD et cette protubérance d'immobilisation PI. Il est alors possible d'entraîner en rotation la première partie P1 pour la placer dans la seconde position dans laquelle sa protubérance d'immobilisation PI est en partie placée devant une face de la paroi de support PS afin d'immobiliser le boîtier BE sur cette dernière (PS).

Egalement par exemple, et comme illustré non limitativement et au moins partiellement sur les figures 3 à 5, la protubérance d'immobilisation PI de chaque première partie P1 peut comprendre deux sous-parties d'immobilisation SPI qui sont opposées de part et d'autre d'une sous-partie centrale SPC. Dans ce cas, ces sous-parties d'immobilisation SPI peuvent avoir des formes générales parallélépipédiques, et peuvent être propres à traverser respectivement deux zones ZT du trou traversant TT correspondant qui sont opposées et ont des formes générales rectangulaires (adaptées à la traversée des sous-parties d'immobilisation SPI correspondantes). Un tel agencement permet d'optimiser l'action d'immobilisation d'un élément de fixation EF par rapport à la paroi de support PS.

Bien que cela n'apparaisse pas sur les figures 4 et 5, la paroi de support PS peut comprendre, sur sa face devant laquelle se déplacent les sous-parties d'immobilisation SPI et à proximité de chaque trou traversant TT, au moins une protubérance de blocage (ou cran) qui est propre à bloquer un élément de fixation EF correspondant placé dans la seconde position. Cela permet avantageusement d'éviter qu'un élément de fixation EF revienne dans sa première position, par exemple du fait d'un choc subi par le véhicule V ou de vibrations générées par ce dernier (V).

## Revendications

1. Equipement (EV) comprenant un boîtier (BE) propre à être solidarisé à une paroi de support (PS) d'un véhicule (V) comprenant au moins trois roues (RV), **caractérisé en ce que** ledit boîtier (BE) comprend au moins deux éléments de fixation (EF) comprenant chacun une première partie (P1) propre à être placée soit dans une première position lui permettant de traverser au moins partiellement un trou traversant (TT) correspondant de ladite paroi de support (PS), soit dans une seconde position dans laquelle elle participe à une immobilisation dudit équipement (EV) sur ladite paroi de support (PS).

2. Equipement selon la revendication 1, **caractérisé en ce que** ledit boîtier (BE) comprend trois éléments de fixation (EF) distants.

3. Equipement selon la revendication 1 ou 2, **caractérisé en ce que** chaque élément de fixation (EF) comprend une seconde partie (P2) solidarisée fixement audit boîtier (BE) et sur laquelle est montée à rotation ladite première partie (P1) afin d'être placée dans sa première ou seconde position.

4. Equipement selon la revendication 3, **caractérisé en ce que** chaque première partie (P1) comprend deux parois distantes (PD) espacées d'une protubérance d'immobilisation (PI) d'une distance supérieure à une épaisseur de ladite paroi de support (PS), afin qu'après la traversée du trou traversant (TT) correspondant par cette protubérance d'immobilisation (PI) placée dans ladite première position, ladite paroi de support (PS) se retrouve placée entre lesdites parois distantes (PD) et ladite protubérance d'immobilisation (PI), de manière à permettre un entraînement en rotation de ladite première partie (P1) propre à la placer dans ladite seconde position dans laquelle ladite protubérance d'immobilisation (PI) est en partie placée devant une face de ladite paroi de support (PS) afin d'immobiliser ledit boîtier (BE) sur cette dernière (PS).

5. Equipement selon la revendication 4, **caractérisé en ce que** ladite protubérance d'immobilisation (PI) comprend deux sous-parties d'immobilisation (SPI) opposées de part et d'autre d'une sous-partie centrale (SPC), de formes générales parallélépipédiques, et propres à traverser respectivement deux zones (ZT) dudit trou traversant (TT) correspondant, opposées et ayant des formes générales rectangulaires.

6. Equipement selon l'une des revendications 1 à 5, **caractérisé en ce qu'**il constitue un bloc optique.

7. Véhicule (V) comprenant au moins trois roues (RV) et une paroi de support (PS), **caractérisé en ce que** ladite paroi de support (PS) comprend au moins deux trous traversants (TT) distants, et **en ce qu'**il comprend en outre un équipement (EV) selon l'une des revendications 1 à 6, solidarisé fixement, mais de façon réversible, à ladite paroi de support (PS) par traversée au moins partielle desdits trous traversants (TT) par lesdites premières parties (P1) des éléments de fixation (EF) correspondants dans ladite première position puis placement desdits éléments de fixation (EF) dans ladite seconde position.

8. Véhicule selon la revendication 7, **caractérisé en ce que** ladite paroi de support (PS) est un écran pare-vent.

9. Véhicule selon la revendication 7 ou 8, **caractérisé en ce que** ladite paroi de support (PS) comprend, à proximité de chaque trou traversant (TT), au moins une protubérance de blocage propre à bloquer un élément de fixation (EF) correspondant placé dans ladite seconde position.

10. Véhicule selon l'une des revendications 7 à 9, **caractérisé en ce qu'**il constitue un triporteur motorisé.
